(19) Europäisches Patentamt / European Patent Office / Office européen des brevets

(11) **EP 2 716 948 A1**

(12) **EUROPEAN PATENT APPLICATION**
published in accordance with Art. 153(4) EPC

(43) Date of publication:
**09.04.2014 Bulletin 2014/15**

(51) Int Cl.:
**F16K 31/05** $^{(2006.01)}$     **F16H 37/08** $^{(2006.01)}$

(21) Application number: **12792352.2**

(22) Date of filing: **15.05.2012**

(86) International application number:
**PCT/RU2012/000383**

(87) International publication number:
**WO 2012/166011 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 RU 2011121427**

(71) Applicants:
• **Federalnoe Gosudarstvennoe Budgetnoe Obrazovatelnoe Uchregdenie Vishego Professionalnogo Obrazonavia Tula 300600 (RU)**
• **Otkritoe Akcionernoe Obshestvo "Michurinski Zavod "Progress"" Michurinsk, Tambovskaya obl. 393773 (RU)**

(72) Inventors:
• **GRJAZEV, Mikhail Vasilievich Tula 300012 (RU)**

• **SIDOROV, Petr Grigorievich Tula 300000 (RU)**
• **DMITRIEV, Vladimir Anatolievich Michurinsk Tambovskaya obl. 393760 (RU)**
• **DMITRIEV, Andrei Vladimirovich Michurinsk Tambovskaya obl. 393760 (RU)**
• **KUHAR, Vladimir Denisovich Tula 300028 (RU)**
• **RASPOPOV, Vladimir Jakovlevich Tula 300000 (RU)**

(74) Representative: **Fischer, Franz IPTO AG International Patent and Trademark Office Schwarztorstrasse 31 Postfach 5135 3001 Bern (CH)**

(54) **UNIVERSAL, HIGH-TORQUE, MULTI-TURN ELECTRIC DRIVE FOR SHUT-OFF VALVES USED IN PIPELINE TRANSPORT**

(57)    The present invention relates to engineering industry and can be applied to any industrial machinery-in particular, to valves of pipelines for liquid and gaseous media transportation.

    A valve electric drive contains: an electric motor and a cased planetary gearbox comprising an input shaft, a planet, a supporting central gear and a two-bearing output shaft with an output central gear. The gearbox is two-stage and monoplanetary, that's why it has a two-bearing planetary carrier and a number of planets equal to the odd number of planets on each stage, which are mounted in pairs inside the carrier. At the same time, rotation axes of the rotor, the carrier, and the input and output shafts are mutually coaxial and coincide with the movement axis of the valve spindle shaft. The rotor is firmly fastened to an input extension of the input shaft and is clasped with the stator, which is fastened to the case collar. The input and output shafts and the planetary carrier are hollow, with holes for spindle shaft and gearbox moving parts placed inside to move freely. Total numbers of teeth for central gear on both planetary stages are equal: $z_{a_1} + z_{b_1} = z_{a_2} + z_{b_2} = z_{\Sigma}$, and are taken from the $200 < z_{\Sigma} < 400$ range. Numbers of teeth for the second-stage central gears are taken from parameter series $z_{a_2} = 80, 81, ...,150$ and $z_{b_2} = 120,121, ..., 250$, so that neither $z_{a_2}/a_{c_2}$, nor $z_{b_2}/a_{c_2}$ are integer, while $z_{\Sigma}/a_{c_2} = z_{\Sigma}/a_{c_1}$ is integer. Numbers of teeth for the first-stage central gears and for planets on both stages are set according to the formulas: $z_{a_1} = z_{a_2} + \Delta z$, $z_{b_1} = z_{b_2} - \Delta z$, $z_{g_2} = 0,5(z_{b_2} - z_{a_2})$ and $z_{g_1} = z_{g_2} - \Delta z$, where $\Delta z = z_{a_1} - z_{a_2} = z_{b_2} - z_{b_1} = z_{g_2} - z_{g_{12}} = 1, 2,...,10$ is defined as

$$\Delta z = z_{b_2} \left( u_{a_{12}b_2}^{b_1} \right)^{-1},$$ where $u_{a_{12}b_2}^{b_1}$ is the amount of the reproducible gear ratio.

EP 2 716 948 A1

Fig. 1

2

**Description**

**BACKGROUND OF THE INVENTION**

**a. Field of the invention**

The present invention relates to engineering industry and can be applied to any industrial machinery-in particular, to valves of pipelines for liquid and gaseous media transportation.

**a. Background of the Related Art**

A conventional approach is to use geared valve electric drives with wormgear or double-stage wormgear power transmissions (see RU 2276751 C1). E.g., there is a conventional pipeline valve drive containing an electric motor with a cog mounted on its shaft, a worm gearbox with an output shaft, a motor shutdown mechanism on endpoints of the valve, a torsion torque limiting mechanism with disk springs placed on the shaft along the worm axis on both sides of the supporting bearing, as well as a geared transmission between the motor and the worm shaft placed inside the transmission connected to the gearbox case. Inside the transmission case made of a lightweight alloy, there is a steel sleeve with a pile containing a single-row thrust bearing closed with a steel disc pressed to the sleeve with an annular collar with a lid. The rings inside the thrust bearing are spaced freely both on the worm shaft and inside the sleeve, as well as on butt ends between the pile and the steel disc.

Such drives are widespread due to advantages of wormgear, such as: high gear ratio on a single stage (usually $u_{y.\Pi}$ =10...60 or sometimes $u_{y.\Pi}$ = 60...100 [see G.losilevich, Machine Parts (Detali mashin). Moscow,1988]), simple structure with small power streams (up to 2,0 ... 2,5 kW), single-way power streaming and self-shutdown.

This approach has a number of disadvantages, such as:

- low efficiency (esp. with high gear ratios of $u_{y.\Pi}$ =40...60 and more);
- increased wear and overheating;
- jamming susceptibility;
- special requirements for cog materials and oiling;
- fixed (orthogonal) arrangement of input and output axes shafts leading to the motor being mounted on an extension relative to the spindle movement axis;
- heavy axial load on the worm;
- single-streaming while conveying power and limited wormgear output capability regarding its resistance and endurance (esp. when the output gear ratio increases).

Thus, such drives cannot be standardized or unified in the given dimensions, therefore each valve would need a specific drive, which would require manufacturers to design a lot of various stock items.

Thus, a wormgear drive has optimum dimensions and weight only at low power (2.0-2.5 kW), when its technical properties and quality can be sacrificed to improve its versatility. But when the power and torque stream increases, the drive loses its structural, as well as competitive, operating, duration, dimensional and production advantages because of single-streaming and constant gear ratio in single given dimensions.

Another conventional drive contains (see RU 2258168 C1): a case, an external drive and a transmission with intermediate rolling elements, an input shaft with a jaw implemented as three identical discs firmly connected to each other by its bases, so that their centers are placed symmetrically around the input shaft axis, as well as a central gear with inner teeth, a retainer with three rows of intermediate rolling elements placed inside its grooves and cinematically connected to the jaw and central gear. The input shaft of the transmission is firmly connected to the rolling elements and the external drive, and has two rolling bearings, one of which is the intermediate rolling elements.

The main problem of the known approach is the number of complex cinematic connections, which decreases drive's reliability and life, and makes it highly dependent on the manufacturing precision (quality class of 4-5 or higher).

The other problem is orthogonal arrangement of geometrical rotation axes of the rotor and the input and output shafts of the power transmission, which makes the drive bulky and impossible to unify and standardize in the given dimensions. This leads to an increase in the variety of stock items, as seen in the assortment of drives produced by *JSC Transneft'*: EPC-100; EPC-400; EPC-800; EPC-1000; EPC-4000; EPC-10000; EPC-15000; EPC-20000; EPC-35000 and EPC-50000 - each of them used mainly on one specific valve type.

Another conventional approach, closely related to the present invention, is a valve drive containing (see RU 2419018 C1): a reversing electric motor, a spindle bar connected to a valve slider, as well as a gearbox placed between the motor and the spindle bar comprising a case, a supplementary driving shaft, a bevel cog, a bevel gear, a bevel clutch, a sliding nut and a hollow output shaft. The shaft makes for coaxiality with the spindle bar, so that the bevel cog has two crowns, while the bevel gear is connected to the case and interconnected with one cog crown, and the bevel clutch is connected to the hollow output shaft with the sliding nut fastened to its bottom and interconnected with the other cog crown.

The main disadvantage of the known approach is that it uses four bevel cogs and two bevel gearings based on them, which poses extremely harsh requirements as for the transmission manufacturing and mounting precision. Failure to comply those requirements can render the whole drive dysfunctional.

Other disadvantages are monoplanetary implementation and highfrequency transportation rotation, which requires a balance for the rotating mass. Such a transmission makes it completely impossible to vary gear ratio in the given dimensions. Thus, each valve needs its specific drive embodiment.

Still other disadvantages include:

- the drive case requires much metal and has big dimensions depending on the pipeline diameter;
- the approach has limited capabilities of reproducing different gear ratios ($u_{np} \leq 50...60$);
- single power streaming;
- nodes and parts cannot be standardized or unified;
- problems with manual double connection, which limits application of the known valve drive.

In addition to that, the two-crown bevel planet with two bevel gearings and input and output central bevel cogs should have an oblique rotation axis of its own, therefore rotation axes of the input and output shafts and the planet itself are not coaxial, and the transmission cannot be multi-stream.

## SUMMARY OF THE INVENTION

Accordingly, the objective of the invention is to improve reliability and cost-efficiency of the valve, as well as technological efficiency of its production and installation. Another objective is to provide for unification and standardization of the gearbox within the given dimensions and the drive as a whole. In addition, there is an objective to reduce dimensions and material consumption of the drive by means of its coaxial placement on the valve and expansion of cinematic and energy capacities of its power transmission with spur gears within the given drive dimensions.

To achieve the objective, the valve electric drive contains: an electric motor and a cased planetary gearbox comprising an input shaft, a planet, a supporting central gear and a two-bearing output shaft with an output central gear. The gearbox is two-stage and monoplanetary, that's why it has a two-bearing planetary carrier and a number of planets equal to the odd number of planets on each stage, which are mounted in pairs inside the carrier. At the same time, rotation axes of the rotor, the carrier, and the input and output shafts are mutually coaxial and coincide with the movement axis of the valve spindle shaft. The rotor is firmly fastened to an input extension of the input shaft and is clasped with the stator, which is fastened to the case collar. The input and output shafts and the planetary carrier are hollow, with holes for spindle shaft and gearbox moving parts placed inside to move freely. Total numbers of teeth for central gears on both planetary stages are equal:

$$z_{a_1} + z_{b_1} = z_{a_2} + z_{b_2} = z_\Sigma$$

where $z_{a_1}$, $z_{b_1}$ - are numbers of teeth for the small and supporting central gears on the first stage,
and $z_{a_2}$, $z_{b_2}$ - are numbers of teeth for the small and output central gears on the second stage;
and are taken from the $200 < z_\Sigma < 400$ range. Numbers of teeth for the second-stage central gears are taken from parameter series $z_{a_2}$ = 80, 81, ...,150 and $z_{b_2}$ =120,121, ..., 250 , so that neither $z_{a2}$ /$a_{c_2}$, nor $z_{b_2}$/$a_{c_2}$ are integer, while $z_\Sigma$/$a_{c_2}$ = $z_\Sigma$/$a_{c_1}$ is integer. Numbers of teeth for the first-stage central gears and for planets on both stages are set according to the formulas:

$$z_{a_1} = z_{a_2} + \Delta z \ , \ z_{b_1} = z_{b_2} - \Delta z \ , \ z_{g_2} = 0{,}5\left(z_{b_2} - z_{a_2}\right)$$

and

$$z_{g_1} = z_{g_2} - \Delta z$$

where $z_{g_1}$, $z_{g_2}$ - are numbers of teeth for planets on the first and second stages, respectively,

and $\Delta z = z_{a_1} - z_{a_2} = z_{b_2} - z_{b_1} = z_{g_2} - z_{g_{12}} = 1, 2, ..., 10$ is defined as $\Delta z = z_{b_2} \left( u_{a_{12}b_2}^{b_1} \right)^{-1}$, where $u_{a_{12}b_2}^{b_1}$ is the amount of the reproducible gear ratio.

In addition:

- the supporting gear is mounted on sliding bearings inside the gearbox case alongside with two power meters, which are cinematically connected to the gear via thrusters and prevent it from (counter)clockwise rotation;
- the manual double is based on bevel drive and is cinematically connected to the carrier via a bevel gear, while the total manual drive gear ratio is defined according to the formula:

$$u_{\text{р.д.}} = \frac{z_{\text{к}}}{z_{\text{ш}}} u_{hb_2}^{b_1} = \frac{z_{\text{к}}}{z_{\text{ш}}} \frac{z_{b_2} z_{a_1}}{z_{b_2} z_{a_1} - z_{b_1} z_{a_2}}$$

where $z_k$, $z_{\text{III}}$ are numbers of teeth for the bevel gear and the manual double cog, respectively;
- the drive case is cylindrical and separable, and has collar connections to the valve and electric motor;
- the carrier bearings are placed in two parts of the case;
- the input shaft has two bearings in the carrier and two crowns of the input small central gear firmly attached to it;
- the case holds the electric motor control hardware, valve position control mechanisms and meters, output torsion torque registering and limiting mechanisms and meters, as well as the manual double mechanisms;
- each pair of planets from both stages of the gearbox is set on the same axis inside the carrier, while one planet is from the first stage, and the other one is from the second stage;
- numbers of planets for both stages are mutually equal and are

$$a_{c_1} = a_{c_2} = 5; 7; 9; 11; 13; 17; 19 ,$$

where $a_{c_1}$ - is the number of planets for the first stage,
and $a_{c_2}$ - is the number of planets for the second stage;
- the first stage of the two-stage gearbox is high-speed with gear ratio lying within the $2,5 \leq u_{a_1b_1}^h \leq 3,5$ range, and the second stage is low-speed with gear ratio lying within the $8 \leq u_{hb_2}^{b_1} \leq 50$ range, while the total gear ratio is defined as $u_{a_{12}b_{2j}}^{b_1} = \dfrac{z_{b_2}}{\Delta z_j}$ with $1 \leq \Delta z_j \leq 10$,
where j is the number of high-speed stage change gear set for a specific valve;
- the output central gear is firmly fastened to the two-bearing output shaft, with one bearing placed on the output central gear hub, and the other one placed inside the hollow input shaft;
- the output shaft is hollow and separable, and has two outlets: a power outlet mounted alongside of the valve spindle driving nut and a cinematic outlet mounted alongside of the hollow input shaft of the gearbox;
- the electric drive dimension series is defined as $a_w = 0{,}25 z_\Sigma m = 0{,}25m(z_{a_2} + z_{b_2})$, where $m$ is a standard drive gearing module, which is taken from the $m$= 0.8; 1.0; 1.25; 1.5; 1.75; 2.0; 2.25; 2.5; 2.75 and 3.0 mm range, while complying to the conditions posed by back-to-back and bending resistance and endurance of teeth, the amount of output torsion torque, mechanical properties of gear material, as well as technologies of teeth production and thermochemical hardening.

## BRIEF DESCRIPTION OF THE ATTACHED FIGURES

The accompanying drawings, which are included to provide a further understanding of the invention and are incorporated in and constitute a part of this specification, illustrate embodiments of the invention and, together with the description, serve to explain the principles of the invention.
In the drawings:

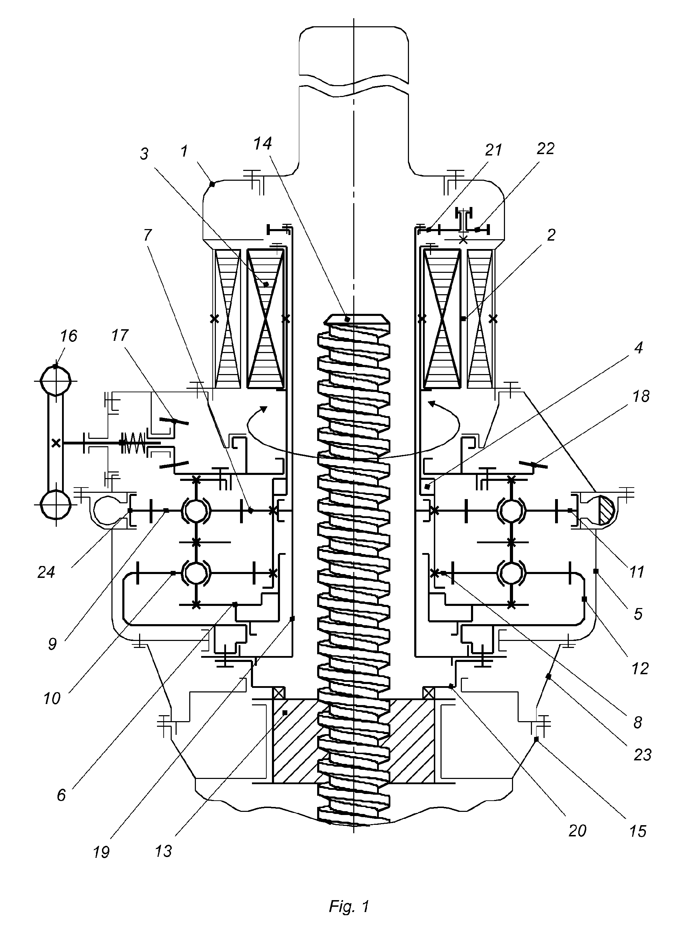

FIG. 1 is a cinematic diagram of the versatile high-torque multiturn electric drive for pipeline valves;

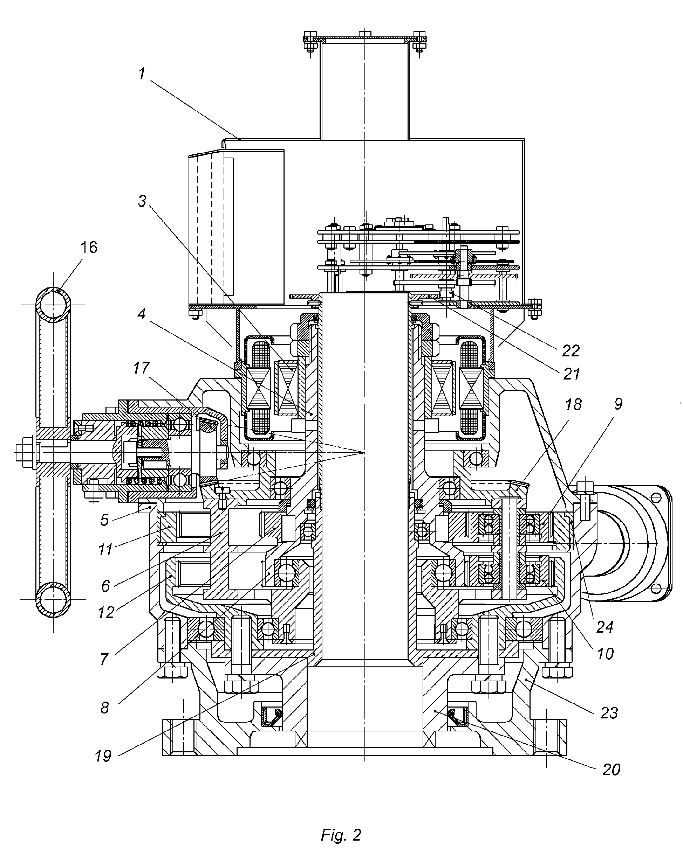

FIG. 2 is a schematic diagram of the invention.

The drawings bear the following marks:

1 - case;
2 - electric motor;
3 - rotor;
4 - input shaft;
5 - gearbox;
6 - carrier $h$ ;
7 - 1 st crown $a_1$ of the small central gear;
8 - 2nd crown $a_2$ of the small central gear;
9 - 1 st planets series $g_{1i}$ ;
10 - 2nd planets series $g_{2i}$;
11 - supporting large central gear $b_1$ ;
12 - output large central gear $b_2$ ;
13 - driving nut of the yoke assembly;
14 - spindle;
15 - valve;
16 - manual double;
17,18 - bevel drive connecting the manual double to the carrier ( $z_{III}$ - $z_K$);
19 - hollow output shaft;
20-jaw half-clutch;
21 - cog on the extension of the output shaft;
22 - port for the electric drive spindle position detector;
23 - adapter connecting the drive to the valve collar;
24 - radial-thrust sliding bearing.

**DETAILED DESCRIPTOPN OF THE INVENTION**

The versatile high-torque multiturn electric drive for pipeline valves contains: an electric motor and a cased planetary gearbox comprising an input shaft, a planet, a supporting central gear and a two-bearing output shaft with an output central gear. The gearbox is two-stage and monoplanetary, that's why it has a two-bearing planetary carrier and a number of planets equal to the odd number of planets on each stage, which are mounted in pairs inside the carrier. At the same time, rotation axes of the rotor, the carrier, and the input and output shafts are mutually coaxial and coincide with the movement axis of the valve spindle shaft. The rotor is firmly fastened to an input extension of the input shaft and is clasped with the stator, which is fastened to the case collar. The input and output shafts and the planetary carrier are hollow, with holes for spindle shaft and gearbox moving parts placed inside to move freely. Total numbers of teeth for central gears on both planetary stages are equal:

$$z_{a_1} + z_{b_1} = z_{a_2} + z_{b_2} = z_\Sigma \ ,$$

where $z_{a_1}$ , $z_{b_1}$ - are numbers of teeth for the small and supporting central gears on the first stage,

and $z_{a_2}$, $z_{b_2}$ - are numbers of teeth for the small and output central gears on the second stage;

and are taken from the $200 < z_\Sigma < 400$ range. Numbers of teeth for the second-stage central gears are taken from parameter series $z_{a_2}$ = 80, 81, ...,150 and $z_{b_2}$ =120,121, ..., 250 , so that neither $z_{a_2}/a_{c_2}$ nor $z_{b_2}/a_{c_2}$ are integer, while $z_\Sigma/a_{c_2} = z_\Sigma \ / \ a_{c_1}$ is integer. Numbers of teeth for the first-stage central gears and for planets on both stages are set according to the formulas: $z_{a_1} = z_{a_2} + \Delta z,\ z_{b_1} = z_{b_2}$ - $\Delta z$ , $z_{g_2}$ = 0,5($z_{b_2}$ - $z_{a_2}$), and $z_{g_1} = z_{g_2}$ - $\Delta z$,

where $z_{g_1}$, $z_{g_2}$ - are numbers of teeth for planets on the first and second stages, respectively,

and $\Delta z = z_{a_1} - z_{a_2} = z_{b_2} - z_{b_1} = z_{g_2} - z_{g_{12}}$ = 1, 2 =1,2,...,10 is defined as $\Delta z = z_{b_2} \left( u_{a_{12}b_2}^{b_1} \right)^{-1}$ , where $u_{a_{12}b_2}^{b_1}$ is the amount of the reproducible gear ratio.

The supporting gear is mounted on sliding bearings inside the gearbox case alongside with two power meters, which are cinematically connected to the gear via thrusters and prevent it from (counter)clockwise rotation.

The manual double is based on bevel drive and is cinematically connected to the carrier via a bevel gear, while the total manual drive gear ratio is defined according to the formula:

$$u_{\text{р.д.}} = \frac{z_{\text{к}}}{z_{\text{ш}}} u_{hb_2}^{b_1} = \frac{z_{\text{к}}}{z_{\text{ш}}} \frac{z_{b_2} z_{a_1}}{z_{b_2} z_{a_1} - z_{b_1} z_{a_2}}$$

where $z_k$, $z_{III}$ are numbers of teeth for the bevel gear and the manual double cog, respectively.

The drive case is cylindrical and separable, and has collar connections to the valve and electric motor.

The carrier bearings are placed in two parts of the case, and the input shaft has two bearings in the carrier and two crowns of the input small central gear firmly attached to it.

The case holds the electric motor control hardware, valve position control mechanisms and meters, output torsion torque registering and limiting mechanisms and meters, as well as the manual double mechanisms.

Each pair of planets from both stages of the gearbox is set on the same axis inside the carrier, while one planet is from the first stage, and the other one is from the second stage.

Numbers of planets for both stages are mutually equal and are

$$a_{c_1} = a_{c_2} = 5; 7; 9; 11; 13; 17; 19,$$

where $a_{c1}$ - is the number of planets for the first stage
and $a_{c2}$ - is the number of planets for the second stage.

The first stage of the two-stage gearbox is high-speed with gear ratio lying within the $2,5 \le u_{a_1 b_1}^{h} \le 3,5$ range,

and the second stage is low-speed with gear ratio lying within the $8 \le u_{hb_2}^{b_1} \le 50$ range, while the total gear ratio is defined as $u_{a_{12} b_{2j}}^{b_1} = \dfrac{z_{b_2}}{\Delta z_j}$ with $1 \le \Delta z_j \le 10$, where $j$ is the number of high-speed stage change gear set for a specific valve.

The output central gear is firmly fastened to the two-bearing output shaft, with one bearing placed on the output central gear hub, and the other one placed inside the hollow input shaft.

The output shaft is hollow and separable, and has two outlets: a power outlet mounted alongside of the valve spindle driving nut and a cinematic outlet mounted alongside of the hollow input shaft of the gearbox.

The electric drive dimension series is defined as
$a_w = 0,25z_\Sigma m = 0,25m(z_{a_2} + z_{b_2})$, where $m$ is a standard drive gearing module, which is taken from the $m=$ 0.8;1.0;1.25;1.5;1.75;2.0;2.25;2.5;2.75 and 3.0 mm range, while complying to the conditions posed by back-to-back and bending resistance and endurance of teeth, the amount of output torsion torque, mechanical properties of gear material, as well as technologies of teeth production and thermochemical hardening.

The drive functions as follows:

When the reversing electric motor **2** is turned on, its rotor **3** mounted on the extension of the hollow input shaft 4 conveys rotation and power streams to the crowns $a_1$ and $a_2$ of small central gears on both planetary stages "$a_1$ - $g_{1_i}$ - $b_1$" and "$a_2$ - $g_{2_i}$ -$b_2$". Then, movement and torque are multi-streamed from the crown $a_1$ of a small central gear to the supporting central gear $b_1$ via planets $g_{1_i}$ (where i is the stage number), and further to the carrier $h$, which subsequently conveys them to planets $g_{2_i}$, concurrently with movement and torque from the other crown $a_2$ of the small central gear. Movement and toque are added up on planets $g_{2_i}$ and then are conveyed to the output central gear $b_2$ mounted on the hollow output shaft **19** connected to the driving nut **13** of the spindle **14** in the valve **15** yoke assembly via the jaw half-clutch (adapter) **20**. The composite hollow shaft **19** of the gearbox has two bearings, one of which is placed inside the gearbox case, on the output central gear $b_2$ hub, and the other one is placed on the support inside the hollow input shaft **4**, while the cog **21** is placed on (or integrated into) the extension of the shaft **19** and it serves as the port **22** for the electric drive spindle 14 position detector (not shown in the drawings **1** and **2**).

The total gear ratio by conveying movement and power from the motor is defined according to the formula:

$$u_{a_{12}b_2}^{b_1} = u_{a_{12}h}^{b_1} \cdot u_{hb_2}^{b_1} = \left(1 + \frac{z_{b_1}}{z_{a_1}}\right) \frac{z_{b_2} z_{a_1}}{z_{b_2} z_{a_1} - z_{a_2} z_{b_1}} ,$$

where $u_{a_1 h}^{b_1}$, $u_{hb_2}^{b_1}$ and $u_{a_{12}b_2}^{b_1}$ are gear ratios for both planetary stages and the drive as a whole, and $z_{a_1}$, $z_{a_2}$, $z_{g_1}$, $z_{g_2}$, $z_{b_1}$, $z_{b_2}$ are numbers of teeth for cogs in the drive.

The objective of the invention can be achieved, if total numbers of teeth for central cogs on both stages are equal:

$$z_\Sigma = z_{a_1} + z_{b_1} = z_{a_2} + z_{b_2} .$$

The numbers of teeth for central gears of the low-speed stage are taken from parameter series $z_{a2}$ = 80, 81, ..., 150 and $z_{b2}$ =120,121, ..., 250 , so that neither $z_{a2}/a_{c2}$ , nor $z_{b2}/a_{c2}$ are integer, while $z_\Sigma/a_{c2} = z_\Sigma/a_{c1}$ is integer. Numbers of teeth for central gears of the high-speed stage and for planets on both stages are defined based on the numbers of teeth for central gears of the low-speed stage according to the formulas: $z_{a1} = z_{a2} + \Delta z$, $z_{b1} = z_{b2} - \Delta z$ , $z_{g2} = 0{,}5(z_{b2} - z_{a2})$, and $z_{g1} = z_{g2} - \Delta z$ ,

where $\Delta z = z_{a1} - z_{a2} = z_{b2} - z_{b1} = z_{g2} - z_{g12} = 1{,}2,..., 10$ is defined as $\Delta z = z_{b_2} \left(u_{a_{12}b_2}^{b_1}\right)^{-1}$ ,where $u_{a_{12}b_2}^{b_1}$ is the amount of the reproducible gear ratio.

In such cases, gearing angles for all operating gearings "$a_1$-$g_{1i}$", "$g_{1i}$-$b_1$", "$a_2$ -$g_{2i}$" and "$g_{2i}$ -$b_2$" are equal and are taken from the $20° \le \alpha_w \le 30°$ range, and the total gear ratio is brought to: $u_{a_{12}b_{2j}}^{b_1} = \frac{z_{b_2}}{\Delta z_j}$ with $1 \le \Delta z_j \le 10$,

where $j$ is the number of high-speed stage change gear set for a specific valve with the given output parameters for speed-and-torque power stream.

The formula above allows to vary the output parameters for the drive speed-and-torque power stream within the $0{,}1\,0{,}1 \cdot z_{b2} \le u_{a_{12}b_2}^{b_1} \le z_{b2}$ range of the given dimensions (axle spacing for operating gearings is $a_w$ =$const$ , and the engine power is $N_{дв}$ = $const$). That is, the stream can be adjusted tenfold by means of changing numbers of teeth for cogs of the high-speed stage with change gears.

To prove the point above, the formula for drive $a_w$ dimensions is given, which results from equality between the numbers of teeth for central gears on both planetary stages:

$$a_w = 0{,}25 z_\Sigma m = 0{,}25 m(z_{a_{1j}} + z_{b_{1j}}) = 0{,}25 m(z_{a_2} + z_{b_2}) ,$$

where $m$ is a standard drive gearing module, which is taken from the $m$ = 0.8; 1.0; 1.25; 1.5; 1.75; 2.0; 2.25; 2.5; 2.75 and 3.0 mm range, while complying to the conditions posed by back-to-back and bending resistance and endurance of teeth, the amount of output torsion torque, mechanical properties of gear material, as well as technologies of teeth production and thermochemical hardening.

When the numbers of teeth for change central gears of the high-speed stage defined as $z_{a1j} = z_{a2} + \Delta z_j$ and $z_{b1j} = z_{b2} - \Delta z_j$ are inserted into the formula above, the result is:

$$a_w = 0{,}25 m(z_{a_{1j}} + z_{b_{1j}}) = 0{,}25 m(z_{a_2} + \Delta z_j + z_{b_2} - \Delta z_j) = 0{,}25 m(z_{a_2} + z_{b_2}) = const$$

with $1 \le \Delta z_j \le 10$.

In addition to that, by varying the module in the given range, the output torque can be adjusted up to 100 kN*m and more.

No conventional multiturn electric drives or power transmissions have such capabilities.

Thus, by changing only change gears $a_{1_j}$, $b_{1_j}$, $g_{1_j}$ and adapters 20 and 23 connecting the multiturn drive to the valve collar and to the driving nut of the spindle 14 in the yoke assembly, the drive can be applied to valves of various diameter and pressure, as well as speed and torque parameters, while keeping the same dimensions and embodiment, making for versatility of the invention. This will help the whole industry to cut the range of stock items from 300-500 to just 5 (or 10, at most) embodiments, which is economically efficient, as well as reasonable and promising from the operating point of view, since it allows to standardize new models of cog-making machinery.

Due to multi-streaming and phase asynchrony in the streams, there are more contact pairs in operating gearings, while the gearings are relieved, which makes the drive itself more reliable and functional. All drive parts have simple forms and can be produced using stock machinery and well-tested production technologies, which makes the invention more technologically efficient. Also, the production of cogs is more cost-efficient, if they are worked together. Convex-concave contacts used in operating power gearings, which are most stressed ones, provide for high performance and operating cost-efficiency of the drive.

The supporting gear $b_1$ is mounted on a radial-thrust sliding bearing **24** inside the gearbox case alongside with two power meters, which are cinematically connected to the gear via thrusters and prevent it from (counter)clockwise rotation (not shown in the drawings **1** and **2**).

The high-torque multiturn electric drive for pipeline valves can be implemented using conventional motor coils, meters and electric control nodes.

Therefore, the invention is more reliable and cost-efficient, if compared to the prior art. It is also more technologically efficient regarding its production and installation. It provides for unification and universalisation of the gearbox within the given dimensions and the drive as a whole. In addition, it succeeds at reducing dimensions and material consumption of the drive by means of its coaxial placement on the valve and expansion of cinematic and energy capacities of its power transmission with spur gears within the given drive dimensions.

**Claims**

1. A valve electric drive containing an electric motor and a cased planetary gearbox comprising an input shaft, a planet, a supporting central gear and a two-bearing output shaft with an output central gear. The gearbox is two-stage and monoplanetary, that's why it has a two-bearing planetary carrier and a number of planets equal to the odd number of planets on each stage, which are mounted in pairs inside the carrier. At the same time, rotation axes of the rotor, the carrier, and the input and output shafts are mutually coaxial and coincide with the movement axis of the valve spindle shaft. The rotor is firmly fastened to an input extension of the input shaft and is clasped with the stator, which is fastened to the case collar. The input and output shafts and the planetary carrier are hollow, with holes for spindle shaft and gearbox moving parts placed inside to move freely. Total numbers of teeth for central gears on both planetary stages are equal:

   $z_{a_1} + z_{b_1} = z_{a_2} + z_{b_2} = z_\Sigma$, and are taken from the 200 < $z_\Sigma$ < 400 range,
   where $z_{a_1}$, $z_{b_1}$ - are numbers of teeth for the small and supporting central gears on the first stage,
   and $z_{a_2}$, $z_{b_2}$ - are numbers of teeth for the small and output central gears on the second stage;
   numbers of teeth for the second-stage central gears are taken from parameter series $z_{a_2}$ = 80, 81, ...,150 and $z_{b_2}$ =120,121, ..., 250 , so that neither $z_{a_2}/a_{c_2}$, nor $z_{b_2}/a_{c_2}$ are integer, while $z_\Sigma / a_{c_2} = z_\Sigma / a_{c_1}$ is integer; numbers of teeth for the first-stage central gears and for planets on both stages are set according to the formulas:

$$z_{a_1} = z_{a_2} + \Delta z \ , \ z_{b_1} = z_{b_2} - \Delta z \ , \ z_{g_2} = 0{,}5(z_{b_2} - z_{a_2}) \ ,$$

   and

$$z_{g_1} = z_{g_2} - \Delta z \ ,$$

   where $z_{g_1}$, $z_{g_2}$ -are numbers of teeth for planets on the first and second stages, respectively,

   and $\Delta z = z_{a_1}$ -$z_{a_2}$ = $z_{b_2}$ - $z_{b_1}$ =$z_{g_2}$ - $z_{g_{12}}$ = 1,2,..., 10 is defined as $\Delta z = z_{b_2} \left( u_{a_{12}b_2}^{b_1} \right)^{-1}$ ,

where $u^{b_1}_{a_{12}b_2}$ is the amount of the reproducible gear ratio.

2. The drive of claim 1, wherein the supporting gear is mounted on sliding bearings inside the gearbox case alongside with two power meters, which are cinematically connected to the gear via thrusters and prevent it from (counter)clockwise rotation.

3. The drive of claim 1, wherein the manual double is based on bevel drive and is cinematically connected to the carrier via a bevel gear, while the total manual drive gear ratio is defined according to the formula:

$$u_{\text{р.д.}} = \frac{z_{\text{к}}}{z_{\text{ш}}} u^{b_1}_{hb_2} = \frac{z_{\text{к}}}{z_{\text{ш}}} \frac{z_{b_2} z_{a_1}}{z_{b_2} z_{a_1} - z_{b_1} z_{a_2}} \, ,$$

where $z_k$, $z_{\text{III}}$ are numbers of teeth for the bevel gear and the manual double cog, respectively.

4. The drive of claim 1, wherein the drive case is cylindrical and separable, and has collar connections to the valve and electric motor.

5. The drive of claim 1, wherein the input shaft has two bearings in the carrier and two crowns of the input small central gear firmly attached to it.

6. The drive of claim 1, wherein the case holds the electric motor control hardware, valve position control mechanisms and meters, output torsion torque registering and limiting mechanisms and meters, as well as the manual double mechanisms.

7. The drive of claim 1, wherein each pair of planets from both stages of the gearbox is set on the same axis inside the carrier, while one planet is from the first stage, and the other one is from the second stage.

8. The drive of claim 1, wherein numbers of planets for both stages are mutually equal and are $a_{c_1} = a_{c_2} = 5; 7; 9; 11; 13; 17; 19$,
where $a_{c_1}$ - is the number of planets for the first stage,
and $a_{c_2}$ - is the number of planets for the second stage.

9. The drive of claim 1, wherein the first stage of the two-stage gearbox is high-speed with gear ratio lying within the $2{,}5 \leq u^h_{a_1 b_1} \leq 3{,}5$ range, and the second stage is low-speed with gear ratio lying within the $8 \leq u^{b_1}_{hb_2} \leq 50$ range,

while the total gear ratio is defined as $u^{b_1}_{a_{12}b_{2j}} = \dfrac{z_{b_2}}{\Delta z_j}$ with $1 \leq \Delta z_j \leq 10$,

where j is the number of high-speed stage change gear set for a specific valve.

10. The drive of claim 1, wherein the output central gear is firmly fastened to the two-bearing output shaft, with one bearing placed on the output central gear hub, and the other one placed inside the hollow input shaft.

11. The drive of claim 1, wherein the output shaft is hollow and separable, and has two outlets: a power outlet mounted alongside of the valve spindle driving nut and a cinematic outlet mounted alongside of the hollow input shaft of the gearbox.

12. The drive of claim 1, wherein its dimension series is defined as $a_w = 0{,}25 z_\Sigma m = 0{,}25 m(z_{a_2} + z_{b_2})$, where $m$ is a standard drive gearing module, which is taken from the $m$= 0.8; 1.0; 1.25; 1.5; 1.75; 2.0; 2.25; 2.5; 2.75 and 3.0 mm range, while complying to the conditions posed by back-to-back and bending resistance and endurance of teeth, the amount of output torsion torque, mechanical properties of gear material, as well as technologies of teeth production and thermochemical hardening.

Fig. 1

Fig. 2

## INTERNATIONAL SEARCH REPORT

International application No.

PCT/RU 2012/000383

A. CLASSIFICATION OF SUBJECT MATTER

F16K 31/05 (2006.01)   F16H 37/08 (2006.01)

According to International Patent Classification (IPC) or to both national classification and IPC

B. FIELDS SEARCHED

Minimum documentation searched (classification system followed by classification symbols)

F16K 31/00-31/10, F16H 1/36, 37/00-37/08

Documentation searched other than minimum documentation to the extent that such documents are included in the fields searched

Electronic data base consulted during the international search (name of data base and, where practicable, search terms used)

RUPAT, Esp@cenet, PCT Online, EAPATIS, PAJ, USPTO DB, PatSearch

C. DOCUMENTS CONSIDERED TO BE RELEVANT

| Category* | Citation of document, with indication, where appropriate, of the relevant passages | Relevant to claim No. |
|---|---|---|
| A | SU 363832 A (GOLDIN L.S. et al.) 08.02.1973, figure 1 | 1-12 |
| A | RU 2170871 C1 (OTRKRYTOE AKTSIONERNOE OBSCHESTVO "GULAELEKTROPRIVOD") 20.07.2001, the abstract | 1-12 |
| A | RU 2307278 C1 (OBSCHESTVO S OGRANCHEHNNOY OTVETSTVENNOSTYU "INT-KLASS" et al.) 27.09.2007, the abstract | 1-12 |
| A | EP 0851163 A2 (HOLTER REGELARMATUREN GMBH & CO. KG) 01.07.1998, the abstract | 1-12 |

☐ Further documents are listed in the continuation of Box C.   ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 17 September 2012 (17.09.2012) | 11 October 2012 (11.10.2012) |

| Name and mailing address of the ISA/ | Authorized officer |
|---|---|
| | |
| Facsimile No. | Telephone No. |

Form PCT/ISA/210 (second sheet) (July 1998)

**EP 2 716 948 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2276751 C1
- RU 2258168 C1
- RU 2419018 C1